# EUROPEAN PATENT APPLICATION

(11) **EP 4 357 965 A1**
(43) Date of publication of application: **24.04.2024**
(21) Application number: 23203834.9
(22) Date of filing: 16.10.2023
(51) Int. Cl.: G06F 40/169, G06F 40/171, G06F 3/04883

(54) **TABLET SCRIBE DEVICE AND METHOD**

(30) Priority: 17.10.2022 US 202263416913 P
(71) Applicant: reMarkable AS, 0473 Oslo (NO)
(72) Inventor: SLETTA, Gunnar, 0473 OSLO (NO); SURÉN, Stian, 1410 KOLBOTN (NO)
(74) Representative: AWA Sweden AB

(57) **Abstract**

Embodiments of the invention provide a computerized device and method for anchoring user made annotations to specific and corresponding portions of a text in an e-paper tablet device, such that the anchored annotations remain in position with the text on other display platforms and in light of further editing on the original text. Accordingly, a user may input a first set of annotations that are anchored to corresponding sections of text. The user may input a second set of annotations that would cause the first set of annotations to be displayed if they were not previously anchored to a corresponding section of text. As such embodiments of the invention enable users to work closely with texts, editing and commenting on them using a stylus device (or even an input mechanism like a finger) while maintaining integrity with the underlying text and its display.

## Description

### TECHNICAL FIELD

The disclosure relates generally to hybrid graphical and textual editing in devices adapted to receive graphical and text inputs from multiple sources. In particular, embodiments of the present invention enable annotations to specific portions of a given text to be anchored to those specific portions such that the relationship is not disrupted by further changes to the underlying text.

### BACKGROUND

Many tablet computers, some mobile telephones and some PCs are equipped with both keyboards and touch- or pen-stylus input systems. One class of tablet computers, the electronic paper tablets, typically include both keyboards and some form of stylus. Interactive displays on these devices combine a display screen, such as an LCD, oLED, plasma or electrophoretic display (EPD), with their input system. The input system recognizes the presence of an input object such as a pen-stylus touching or in close proximity to the display screen, which may produce new lines or drawings for display on the devices.

The multiple input devices enhance the capabilities of these electronic devices for users. For example, users may read a text on the screen of an electronic paper tablet and use an input device, such as a stylus to make marginal notes and other annotations to the text. Such behaviors in an electronic paper tablet render the device much more like conventional paper, which some users find to be a tremendous advantage.

Tablet devices may generate annotations responsive to a user providing free form gestures (e.g., to a touch screen) in proximity to display text. Example annotations include sketches, drawings, markings, and scribbles that correspond to a gesture made by a user (e.g., using an input mechanism). Text characters may be generated responsive to a user interacting with an alphanumeric input device (e.g., a keyboard or touch screen keyboard).

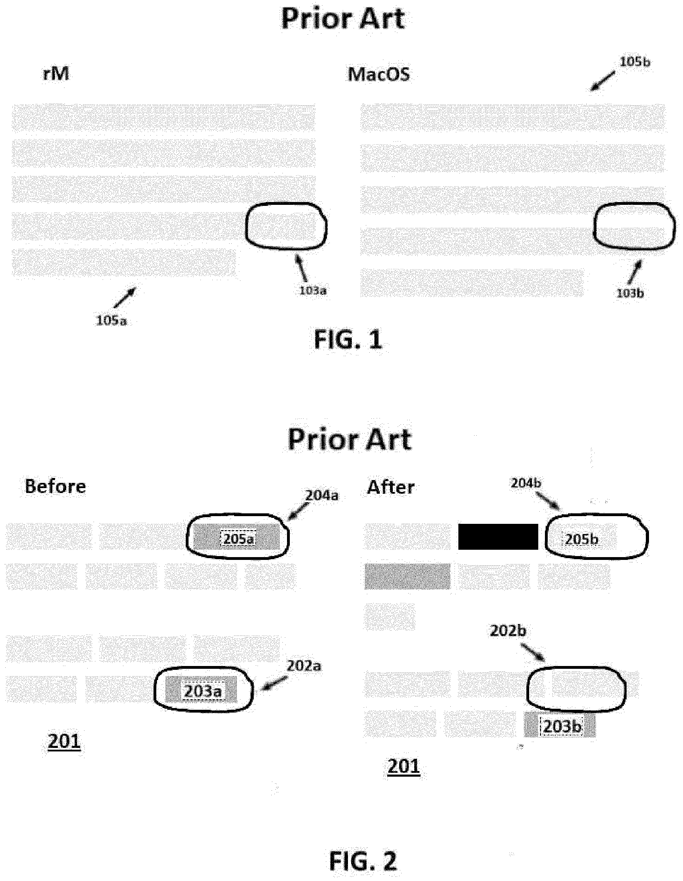

As shown in FIG. 1 and FIG. 2 implementations of conventional annotation systems in computing devices have several drawbacks. As shown, in FIG. 1, lines may drift across platforms. For example, an annotation 103a made to a text 105a displayed on one platform when the same underlying text is shown on another platform as text 105b, annotation 103b has drifted its position from platform to platform and no longer has a tight connection to the corresponding text. In short, lines and text lose their relationship due to different text rendering across platforms.

FIG. 2 illustrates another problem with conventional annotation systems caused when a change is made to a text 201 having annotations. The "Before" part of FIG. 2 illustrates an annotation 204a to a portion of text 205a and an annotation 202a to a portion of text 203a. Within a paragraph, edits move words following the edit both horizontally and vertically, and the following paragraphs vertically. As shown in the "After," a new word has been added to the text 201, which moves text 205b sideways, shifting its annotation 204b but not by an amount matching the movement of the text 205b. Similarly, the addition of the new word to the text 201 has shifted the text down, causing the text 203b to move but not in synch with the annotation 202b, which now matches more closely another piece of text. Similarly, merging edits from two devices will also move words unexpectedly.

While great strides have been made in recent years in improving the display of text on tablet devices, further improvements are still warranted. Moreover, specific use cases for annotations on such devices seemingly compels additional functionality not available in conventional devices.

### SUMMARY OF THE INVENTION

The present invention concerns a tablet scribe device, a method, a computer program and computer-readable medium according to the accompanying claims.

### BRIEF DESCRIPTION OF DRAWINGS

The disclosed embodiments have other advantages and features which will be more readily apparent from the detailed description, the appended claims, and the accompanying figures (or drawings). A brief introduction of the figures is provided below.
FIG. 1 illustrates a first limitation in conventional annotation systems on tablet devices.
FIG. 2 illustrates a second limitation in conventional annotation systems on tablet devices.
FIG. 3 illustrates a system architecture for a tablet scribe device that enables (or provides for) display on a screen (or display) rendered free form input from a user (e.g., handwriting, gesture or the like), according to one example embodiment.
FIG. 4 is a block diagram of the system architecture of a tablet scribe device, according to one example embodiment.
FIG. 5 illustrates hardware components of a representative Electrophoretic Display (EPD) in accordance with a disclosed embodiment.
FIG. 6 illustrates a representative display stack 600 comprised of various display component layers.
FIGs. 7A-7E illustrate some of the contexts in which annotations may be performed and in which anchoring may become desirable.
FIGs. 8A-8B illustrate further aspects of invisible automatic grouping of annotations, according to an embodiment of the invention
FIGs. 9A-9B illustrate additional aspects of anchoring approaches that the anchor module 470 may employ for annotations with respect to bounding boxes
FIGs. 10A-10C provide examples of bounding boxes with respect to annotations.
FIGs. 11A-11B illustrate the anchor module 470 grouping annotations based on bounding boxes, according to an embodiment of the invention.
FIG.s 12A-12B illustrate annotations (with bounding boxes) anchored to text characters by the anchor module 470.
FIG. 13 illustrates two (e.g., simultaneous) edits made in two different places (e.g., by two devices both editing the same document) that show how anchoring helps ensure that annotations maintain their intended relationships with the text when the edits are synchronized.
FIGs. 14A-14C illustrate the use of annotation anchoring with text displayed in a portion of an interface, according to some embodiments.
FIGS. 15A-B also illustrate the use of annotation anchoring with text displayed in a portion of an interface, according to some embodiments.
FIGS. 16A-D also illustrate the use of annotation anchoring by the anchor module 470 and the resulting impacts of anchoring on text displayed in a portion of an interface, according to some embodiments.
FIG. 17 illustrates additional images and descriptions of annotation anchoring.
FIG. 18 is a block diagram illustrating components of an example machine able to read instructions from a machine-readable medium and execute them in a processor (or controller), according to one embodiment.

The figures depict various embodiments of the presented invention for purposes of illustration only. One skilled in the art will readily recognize from the following discussion that alternative embodiments of the structures and methods illustrated herein may be employed without departing from the principles described herein.

### DETAILED DESCRIPTION

Reference will now be made in detail to several embodiments, examples of which are illustrated in the accompanying figures. Embodiments of the invention herein relate to anchoring annotations to text as displayed on a variety of devices, primarily electronic paper tablet devices but also to other types of computing devices as well. The inventors have attempted to solve the problems discussed above in a manner that is generally predictable, intuitive, and distraction free. Before undertaking to explain embodiments of the invention, an explanation will first be provided of the environment and physical hardware in which embodiments of the invention arise as an aid to help the reader understand the invention and its specific context.

### SYSTEM CONFIGURATION

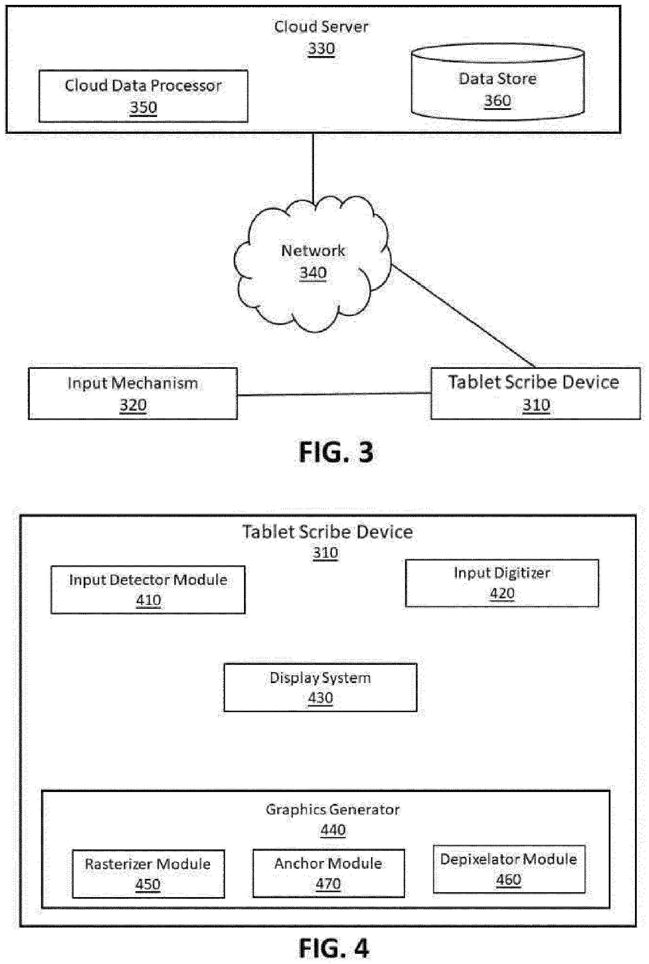

FIG. 3 illustrates a system architecture for a tablet scribe device that enables (or provides) for display on a screen (or display) rendered free form input from a user (e.g., handwriting, gesture or the like), according to one example embodiment. In the example embodiment illustrated in FIG. 3, the system environment comprises a tablet scribe device 310, an input mechanism 320, a cloud server 330, and a network 340. One embodiment of the tablet scribe device 310 is an electronic paper tablet or e-paper tablet that attempts to replicate user experiences with pen and paper on electronic device. For this reason, embodiments of the tablet scribe device 310 include electronic paper tablets. Of course, the tablet scribe device 310 may have other embodiments, such as mobile phones and more conventional electronic tablets.

The tablet scribe device 310 may comprise a computer system configured to receive contact input (e.g., detect handwriting, gestures (generally, gestures)) and process the gestures into instructions for updating the user interface to provide, for display, a response corresponding to the gesture (e.g., show the resulting gesture) on the tablet scribe device 310. The tablet scribe device 310 may also include a keyboard to enable typed input.

Examples of the tablet scribe device 310 may include a computing tablet with a touch sensitive screen (hereafter referred to as a contact-sensitive screen). As noted above, the principles described herein may be applied to other devices coupled with a contact-sensitive screen, for example, desktop computers, laptop computers, portable computers, personal digital assistants, smartphones, or any other device including computer functionality.

The tablet scribe device 310 receives gesture inputs from the input mechanism 320, for example, when the input mechanism 320 makes physical contact with a contact-sensitive surface (e.g., the touch-sensitive screen) on the tablet scribe device 310. Based on the contact, the tablet scribe device 310 generates and executes instructions for updating content displayed on the contact-sensitive screen to reflect the gesture inputs. For example, in response to a gesture transcribing a verbal message (e.g., a written text or a drawing), the tablet scribe device 310 updates the contact-sensitive screen to display the transcribed message. As another example, in response to a gesture selecting a navigation option, the tablet scribe device 310 updates the screen to display a new page associated with the navigation option. As another example, the input mechanism 320 may also include an interface with a keyboard that allows the user to input typed information as well as, or in addition to, input information from physical contact with a contact-sensitive surface.

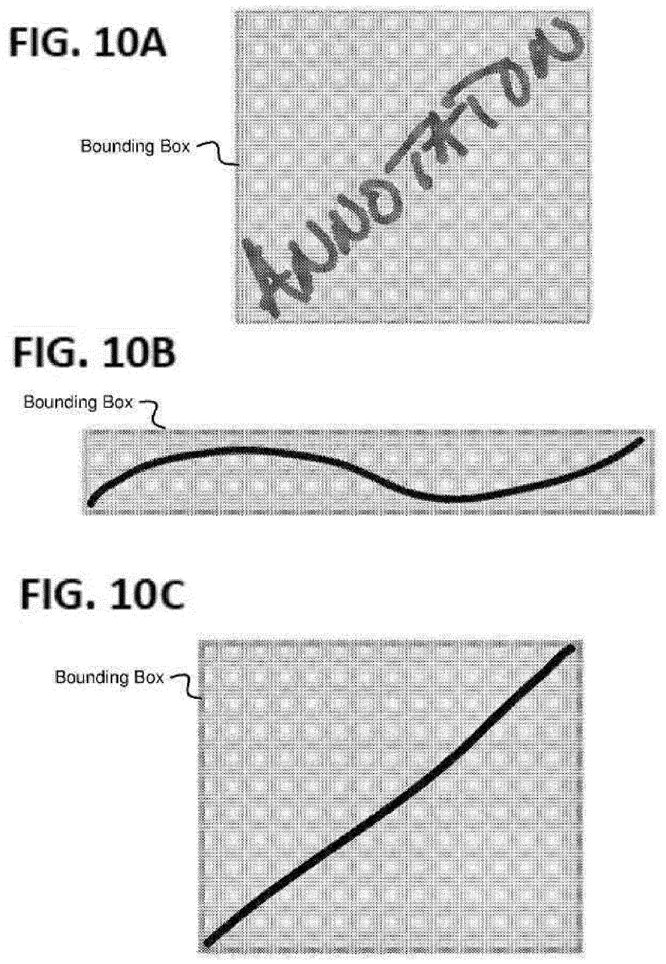

The input mechanism 320 refers to any device or object that is compatible with the contact-sensitive screen of the tablet scribe device 310. In one embodiment, the input mechanism 320 may work with an electronic ink (e.g., E-ink) contact-sensitive screen. For example, the input mechanism 320 may refer to any device or object that can interface with a screen and, from which, the screen can detect a touch or contact of said input mechanism 320. Once the touch or contact is detected, electronics associated with the screen generate a signal which the tablet scribe device 310 can process as a gesture that may be provided for display on the screen. Upon detecting a gesture by the input mechanism 320, electronics within the contact sensitive screen generate a signal that encodes instructions for displaying content or updating content previously displayed on the screen of the tablet scribe device 310 based on the movement of the detected gesture across the screen. For example, when processed by the tablet scribe device 310, the encoded signal may cause a representation of the detected gesture to be displayed on the screen of the tablet scribe device 310, for example a scribble, see, e.g., FIG. 10B.

In some embodiments, the input mechanism 320 is a stylus or another type of pointing device. Alternatively, the input mechanism 320 may be a part of a user's body, for example a finger and/or thumb. In addition, as mentioned above, the input mechanism might also comprise a keyboard in place of or in addition to a pointing device.

The cloud server 330 receives information from the tablet scribe device 310 and/or communicates instructions to the tablet scribe device 310. As illustrated in FIG. 3, the cloud server 330 may comprise a cloud data processor 350 and a data store 360. Data recorded and stored by the tablet scribe device 310 may be communicated to the cloud server 330 for storage in the data store 360. For example, the data store 360 may store documents, images, or other types of content generated or recorded by a user through the tablet scribe device 310. In some embodiments, the cloud data processor 350 monitors the activity and usage of the tablet scribe device 310 and communicates processing instructions to the tablet scribe device 310. For example, the cloud data processor 350 may regulate synchronization protocols for data stored in the data store 360 with the tablet scribe device 310.

Interactions between the tablet scribe device 310 and the cloud server 330 are typically performed via the network 340, which enables communication between the tablet scribe device 310 and the cloud server 330. In one embodiment, the network 340 uses standard communication technologies and/or protocols including, but not limited to, links using technologies such as Ethernet, 802.11, worldwide interoperability for microwave access (WiMAX), 3G, 4G, LTE, digital subscriber line (DSL), asynchronous transfer mode (ATM), InfiniBand, and PCI Express Advanced Switching. The network 340 may also utilize dedicated, custom, or private communication links. The network 340 may comprise any combination of local area and/or wide area networks, using both wired and wireless communication systems.

FIG. 4 is a block diagram of the system architecture of a tablet scribe device, according to one example embodiment. In the embodiment illustrated in FIG. 4, the tablet scribe device 310 comprises an input detector module 410, an input digitizer 420, a display system 430, and a graphics generator 440.

The input detector module 410 may recognize that a gesture has been or is being made on the screen of the tablet scribe device 310. The input detector module 410 refers to electronics integrated into the screen of the tablet scribe device 310 that interpret an encoded signal generated by contact between the input mechanism 320 and the screen into a recognizable gesture. To do so, the input detector module 410 may evaluate properties of the encoded signal to determine whether the signal represents a gesture made intentionally by a user or a gesture made unintentionally by a user.

The input digitizer 420 converts the analog signal encoded by the contact between the input mechanism 320 and the screen into a digital set of instructions. The converted digital set of instructions may be processed by the tablet scribe device 310 to generate or update a user interface displayed on the screen to reflect an intentional gesture; see, e.g., FIG. 10B.

The display system 430 may include the physical and firmware (or software) components to provide for display (e.g., render) on a screen a user interface. The user interface may correspond to any type of visual representation that may be presented to or viewed by a user of the tablet scribe device 310.

Based on the digital signal generated by the input digitizer 430, the graphics generator 440 generates or updates graphics of a user interface to be displayed on the screen of the tablet scribe device. The display system 430 presents those graphics of the user interface for display to a user using electronics integrated into the screen.

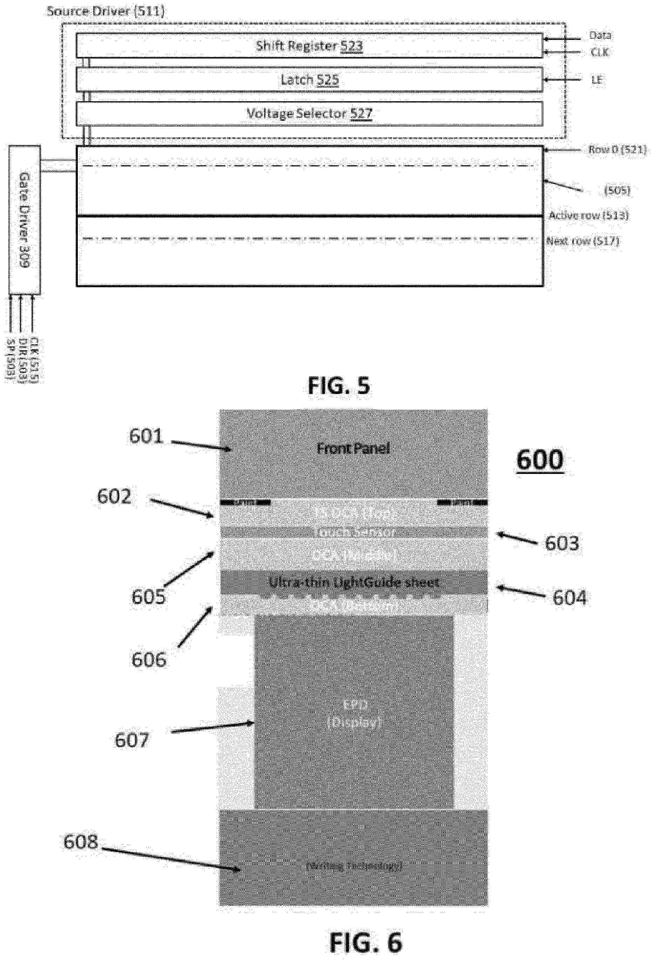

When the input mechanism 320 shown in FIG. 3 contacts a contact-sensitive screen of a tablet scribe device 310, the input detector module 410 recognizes a gesture has been made through the screen. The gesture may be recognized, for example, as a part of an encoded signal generated by the compression of the coil in the input mechanism 320 and/or corresponding electronics of the screen of the display system 430 when the input mechanism makes contact with the contact sensitive screen. The encoded signal is transmitted to the input detector module 410, which evaluates properties of the encoded signal in view of at least one gesture rule to determine whether the gesture was made intentionally by a user. The input detector module 410 is further described with reference to FIG. 6.

If the input detector module 410 determines that the gesture was made intentionally, the input detector module 410 communicates the encoded signal to the digitizer output 420. The encoded signal is typically an analog representation of the gesture received by a matrix of sensors embedded in the display of the tablet scribe device 310.

In one example embodiment, the input digitizer 420 translates the physical points on the screen that the input mechanism 320 made contact with into a set of instructions for updating the data provided for display on the screen. For example, if the input detector module 410 detects an intentional gesture that swipes from a first page to a second page, the input digitizer 420 receives the analog signal generated by the input mechanism 320 as it performs the swiping gesture. The input digitizer 420 generates a digital signal for the swiping gesture that provides instructions for the display system 430 of the tablet scribe device 310 to update the user interface of the screen to transition from, for example, a current (or first page) to a next (or second page, which may be before or after the first page).

In one example embodiment, the graphics generator 440 receives the digital instructional signal (e.g., swipe gesture indicating page transition (e.g., flipping or turning) generated by the input digitizer 420. The graphics generator 440 generates graphics or an update to the previously displayed user interface graphics based on the received signal. The generated or updated graphics of the user interface are provided for display on the screen of the tablet scribe device 310 by the display system 430, e.g., displaying a transition from a current page to a next page to a user.

The graphics generator 440 comprises a rasterizer module 450 and a depixelator module 460. Input gestures drawn by a user on a contact-sensitive surface are received as vector graphics and are input to the rasterizer module 450. The rasterizer module 450 converts the input vector graphics to raster graphics, which can be displayed (or provided for display) on the contact-sensitive surface. The depixelator module 460 may apply image processing techniques to convert the displayed raster graphics back into vector graphics, for example to improve processing power of the tablet scribe device 310 and to conserve memory of the tablet scribe device 310. In one implementation, the depixelator module 460 may convert a displayed raster graphic back to a vector graphic when exporting content displayed on the screen into a different format or to a different system.

The graphics generator 440 includes an anchor module 470 that converts user gestures (e.g., lines forming annotations) related to text and other information on the display and anchors those annotations to corresponding text or other information such that these annotations remain anchored to the corresponding text or other information even when displayed on other systems or in light of changes to the underlying text (e.g., the addition or deletion of words or figures) or changes to other annotations. Much of the rest of this detailed description will concern operation and construction of the anchor module 470.

FIG. 5 illustrates hardware components of an example Electrophoretic Display (EPD) in accordance with an embodiment of the invention. The EPD may be part of the display system 430 of the display stack 600 shown in FIG. 6. The EPD includes a gate driver 309, a source driver 511, a shift register 523 with data and clock signal line, a latch 525, a voltage selector 527, and rows making up a display 505. The EPD industry borrowed certain components and concepts from the LCD industry; however, these two devices have some fundamental differences as well. Of particular relevance here is the persistence of pixels in EPD displays. Unlike LCD displays, EPD displays do not require the frequent refreshing required in an LCD display. In an EPD display, once a neutral voltage is set for a pixel, the pixel will not change, for example, and will persist for a long period of time, especially relative to an LCD display.

As mentioned, Electrophoretic displays (EPDs) 505 have utilized many aspects of LCD production infrastructure and driving mechanisms. The driving electronics typically consist of a gate driver (GD) 309 and a source driver (SD) 511. The EPD display 505 has multiple rows of pixels. Pixel values within a row may be changed, e.g., logic high voltage may be a "black" pixel and a logic low voltage or "ground" may be a no color pixel. The pixels in the EPD 505 function similarly to small capacitors that persist over long time intervals. An EPD pixel contains a large number of charged particles that are suspended in a liquid. If a charge is applied, the particles will move to a surface where they become visible. White and black particles have opposite charges such that a pixel's display may change from white to black by applying an opposite charge to the pixel. Thus, the waveforms applied to an EPD comprise long trains of voltages to change from black to white or vice versa. The EPD arts are also known to have the ability to apply variable voltage levels that mix the white and black particles to produce various shades of gray. Voltage levels in a pixel also may be tiered between to provide shades between no color and black (e.g., levels of grey). Groups of pixels around each other may form a region that provides some visible characteristic to a user, e.g., an image on a screen, e.g., of the display system 430 of the e-paper tablet device 510.

To change pixel values in a region, a scan of the EPD display 505 will conventionally start at a top row, e.g., row 0 421, and apply voltages to update pixels within a particular row where pixels need to be changed to correspond with the image that is displayed. In this example, a start pulse (GDSP) 503 can be used to reset the driver 511 to row 0 421. A row-by-row selection is made by driving the driver gate 309 to select a row, e.g., active row 513. All pixels in one row are addressed concurrently using data transferred to the display. Latch 525 receives from the shift register 523 the next set of voltages to be applied to a row of pixels. When the scan of the active row is completed and, if necessary, pixels changed or updated, a clock pulse (GDCLK) 515 is issued to the driver gate 309 to change to the next row 517 for a scan.

The source driver 511 is used to set the target voltage for each of the pixels/columns for the selected row. It consists of a shift register 523 for holding the voltage data, a latch circuit 525 for enabling pixel data transfer while the previous row is being exposed, and a voltage selector (multiplexer) 527 for converting the latched voltage selection into an actual voltage. For all rows to be updated all the voltage values have to be shifted into the register 523 and latched for the voltages to be available.

The reader can appreciate that the tablet scribe device 310 described in FIG. 3 through FIG. 5 contains a reasonable amount of complexity. Embodiments of the display system 430, for example, typically comprise a stack comprised of various components in the tablet scribe device 310.

FIG. 6 illustrates a representative display stack 600 comprised of various display component layers. From the bottom layer to a top layer, these layers comprise an EPD display 607, an optical clear adhesive layer 606, a lightguide sheet 604, an optical clear adhesive layer 605, a touch sensor 603, an optical clear adhesive layer 602, and a front panel 601. The EPD display 607 may comprise components similar to the EPD display 505 described in FIG. 5. When writing technology is present (not shown in FIG. 6, but if present, then it is likely below the EPD display 607), the writing technology may comprise similar elements to the graphics generator 440 disclosed in FIG. 4. The optical clear adhesive layers 606, 604, 602 are employed to attach components from other portions in the stack 600 together but to do so in a manner that does not alter or impede the light transiting through the stack 600 to the user. The touch sensor 603 operates as a portion of the touchscreen that has been described above, particularly in conjunction with FIG. 3. The stack 600 is conventionally capped by a front panel 601 that the user may touch during device operation. The front panel 601 is conventionally comprised of glass but could be comprised of other materials. For example, US Application No. 18/114,896, filed on 27 February 2023, entitled "Cover Lens for Consumer Electronics Device," describes one such front panel suitable for implementation in the stack 600.

The lightguide sheet 604 is described in FIG. 6 as an ultra-thin lightguide sheet. As discussed above, consumer demands have compelled display stacks like the display stack 600 to become increasingly thinner so that the overall device (e.g., the tablet scribe device 310) can itself become thinner and so that the parallax effect due to the separation between the EPD and the writing surface can be reduced.

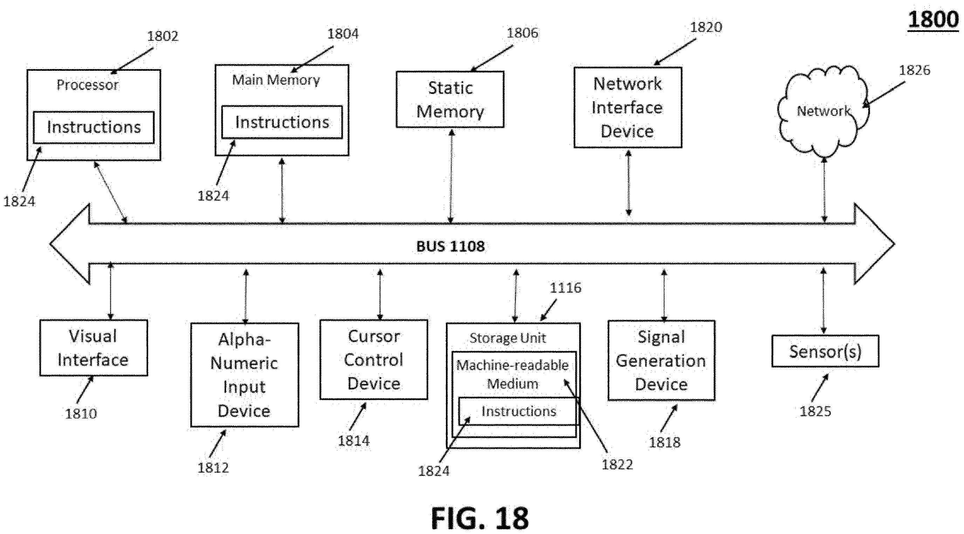

It is noted that although the discussion herein is in the context of a tablet device 310, the principles described may be applied to other computer systems including, for example, personal computers, smartphones, and other tablet devices (e.g., APPLE IPAD, SAMSUNG GALAXY TAB, AMAZON FIRE). Computer systems are further described with respect to FIG. 18.

### ANCHORING ANNOTATIONS

For tablet scribe devices 310 that accept and display both text characters and gestures as input for documents, users typically would like annotations (typically generated by gestures) to be displayed in the document relative to the corresponding text (even if the text is later altered or the document is displayed by different computer systems (e.g., different tablet scribe devices 310 using different operating systems or having different screen sizes)). As discussed in connection with FIG. 1 and FIG. 2, annotations are not conventionally tethered to their corresponding text, such that changes to the text and/or changes made to the annotations themselves and/or display of the text on a different device, cause the position of the annotations relative to the corresponding text to become misaligned such that the user cannot easily determine what part of the text pairs with a given annotation.

A system for anchoring annotations to text may be applied in devices (e.g., the tablet scribe device 310) having a physical screen (such as described above with respect to FIG. 5 and FIG. 6), a marker input device for pen input (such as the input mechanism 320 shown in FIG. 3), a memory storage unit (such as the memory 1804 shown in FIG. 18) and a processor (such as the processor 1802 shown in FIG. 18). A digital text may be stored in the memory unit (e.g., the memory 1804) of the tablet scribe device 310. The depixelator module 460 may be useful in document import and export, such as converting a document from a PDF to PNG.

A user applies the marker input device to a physical screen to record annotations and drawings in a point-by-point manner at a hardware specific sampling interval. Each sequence of the marker input device touching the screen, moving about to record points and up to and including the being lifted, may be considered a single line. This line is then stored in the physical memory of the tablet scribe 310 and for every line that is created, the anchor module 470 shown in FIG. 4 creates a new group for that line or update existing groups of lines. As described herein, anchoring is performed by the anchor module 470 shown in FIG. 4. The anchor module 470 could be implemented in hardware and/or software for operation with the tablet scribe device 310.

The digital text stored in memory is represented in a data structure that facilitates operations in distributed computing environments, such as the Conflict-free Replicated Data Type (CRDT) data structure. A CRDT data structure may be replicated across multiple computers in a network, and typically has the following features: 1) an application can update any replica independently, concurrently and without coordinating with other replicas, 2) an algorithm (itself part of the CRDT data type) automatically resolves any inconsistencies that might occur, and 3) although replicas may have different states at any specific point in time, they are guaranteed to eventually converge. Here, the anchor module 470 assigns a unique identifier to every character in the digital text.

The anchor module 470 shown in FIG. 4 connects anchored groupings with a unique identifier called the anchoring id. As the user edits the digital text, by using a virtual or physical keyboard of the tablet scribe device 310, edits are made to the digital text in memory, but the unique identifiers per character stay the same. Deleted characters retain their ID and relative position in the digital text, even if they are no longer visible to the user. Thus, the anchor module 470 may continuously derive the physical position of every anchor id on display screen, regardless of how the user edits the document. (While the anchoring process will be described in terms of the tablet scribe device 310, the same approach could be applied if the document is opened on other computing platforms and the digital text is edited there.)

The anchoring operations of the anchor module 470 are also in effect when the digital text is updated as a result of receiving an updated version of the digital text from the cloud storage unit 330 shown in FIG. 3. This can result in the addition of a paragraph added to the document from another computing device or fixing a typo on a mobile phone. The document will merge with the non-resident copy as defined by the CRDTs and as a result, the anchor positions may move on the page as it is displayed. If anchor positions move, the display of anchored groups will move along with them, based on the rules outlined in the display algorithm.

Annotations may be generated responsive to a user providing free form gestures (e.g., to a touch screen). Example annotations include sketches, drawings, markings, underlinings, and scribbles that correspond to a gesture made by a user (e.g., using an input mechanism such as a stylus). Text characters may be generated responsive to a user interacting with an alphanumeric input device (e.g., a keyboard or touch screen keyboard).

Annotation anchoring enables text and annotations to keep their original (e.g., spatial) relationship in a document regardless of text alterations or which computer system renders (displays) the document. Said differently, annotation anchoring, helps maintain the position of an annotation relative to text (e.g., a single character, word, or paragraph).

Note that the "lines" described in the following anchoring examples may be formed using an input device such as a pen or a stylus. Lines are example annotations and any descriptions of lines may also be applicable to other types of annotations. The pen may interoperate with a tablet scribe device 310 (e.g., the pen is an input mechanism 320). Annotations may be formed using tools other than a pen, for example, a user's finger or other electronic marking instrument. (Anchoring could also be applied to generic desktop computers, mobile phones and tablets, based on alternative input methods, such as mouse, finger touching the screen, etc.)

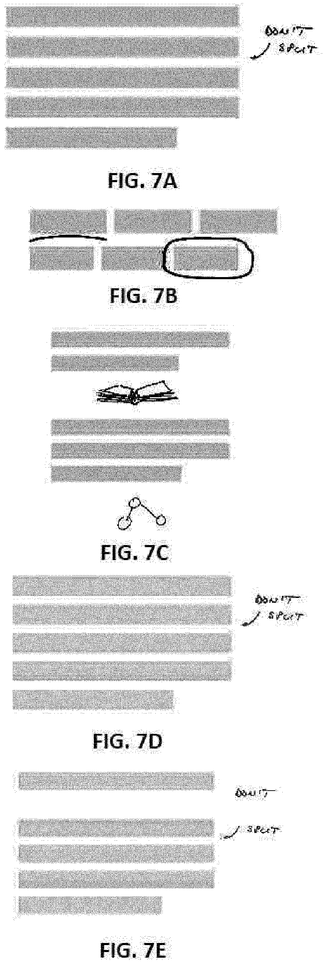

FIGs. 7A-7E illustrate some of the contexts in which annotations may be added by a user and in which anchoring becomes desirable. FIG. 7A illustrates a situation in which a user has annotated a text by scribbling comments and thoughts on the side of a paragraph. Anchoring such annotations entails maintaining display of this relationship while the user performs further edits to the text and/or to the annotation or with respect to other annotations. FIG. 7B illustrates a situation in which a user has marked specific words in a text. Such words may be marked using gestures that produce markings such as a circle, an underline, and/or strikethrough text. Anchoring such annotations entails making sure that display of the annotation stays with the corresponding word in the text. FIG. 7C illustrates a situation in which the user has inserted an object, such as a drawing, in the middle of a text. The user may, for example, draw between and beneath the text as shown. Anchoring such drawings between a first paragraph and a second paragraph entails picking up the typed text on the other side of the annotation and/or continuously pushing down display of the annotation while typing by the user continues. FIG. 7D and FIG. 7E illustrate a situation when a user wants to group and anchor text together, such that grouped lines that give meaning together and may be anchored to an optimal place in the text. Thus, anchoring in this context entails grouping lines to keep their relationship when editing or switching platforms. FIG. 7D and FIG. 7E illustrate a situation where the user has inserted a space to create a new paragraph and display of the anchored annotations travels with its corresponding text.

### Implementation of Anchoring

The system described above in FIGs. 3-6 may be configured to implement anchor points, primarily by action of the anchor module 470 illustrated in FIG. 4 acting together with other elements of the tablet scribe device 310 hardware, according to an embodiment of the invention. The anchor module 470 may implement anchor points by assigning unique identifiers to one or more characters in a document. For example, the anchor module 470 may assign a unique identifier to each character in a document. Using these identifiers, the anchor module 470 effectively knows the location of a character relative to nearby characters (e.g., adjacent or within a threshold number of characters).

After the anchor module 470 assigns unique identifiers to existing characters, if a new character is inserted into the document, the anchor module 470 assigns the new character a unique identifier. By employing this system, then an identifier of a character may stay the same even if text characters are inserted or removed before or after that character. As further described below, the anchor module 470 may use these identifiers to determine the geometric position of anchor points across edits and across devices or clients.

When a user inserts or adds an annotation to a document, the anchor module 470 may associate the annotation with a unique identifier of text (e.g., a single character, word, or paragraph) in the document (referred to as an "anchor point"). This process positions the annotation in the document relative to the position/location of the associated anchor point in the document. For example, if text around an anchor point changes (such as shown in FIGs. 7A-7E), the anchor module 470 may move the anchor point to a different position in the document and update the position of the annotation in the document to move in accordance with the anchor point. Thus, the annotation moves with the anchor point. Accordingly, the movement of the annotation is the same as the movement of the anchor point.

The anchor module 470 may select an anchor point for an annotation based on several different parameters. Example parameters include: 1) geometry (e.g., the initial position of the annotation in the document or the shape or size of the annotation), and 2) time (e.g., when the user generates the annotation relative to other annotations or text). For example, after the user generates an annotation, the anchor module 470 may anchor the annotation to the nearest character. In another example, the anchor module 470 anchors the annotation to the character closest to a center of the annotation.

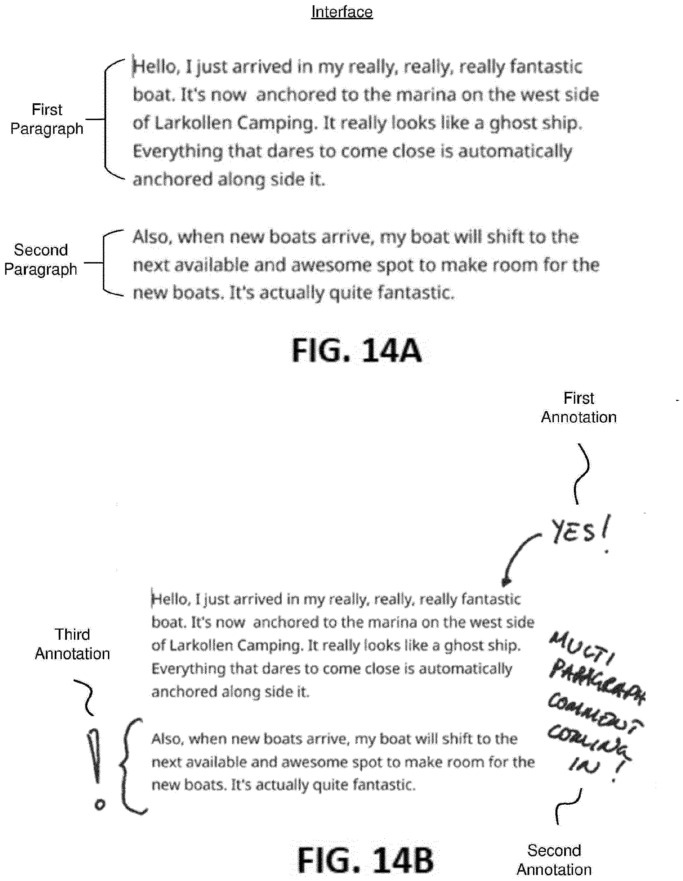

The anchor module 470 may enable multiple annotations to be grouped together to share a single anchor point. For example, referring to FIG. 14B, the bracket, circle, and triangle annotations in the lower left corner (collectively forming an exclamation mark and labeled "third annotation") may be grouped together by the anchor module 470 so these elements share a single anchor point. The anchor module 470 may perform such groupings if an annotation is within a threshold distance of another annotation or if the user generates an annotation within a threshold time of another annotation, according to an embodiment of the invention. Grouping may help preserve a drawing or sketch that includes multiple annotations (e.g., lines). In other words, grouping may capture and retain the user's annotation intention, which in FIG. 14B is the exclamation mark drawn by the user.

### Additional Descriptions of Anchoring

Anchoring by the anchoring module 470 enables keeping (maintaining) the intended relationship between annotations (e.g., generated by hand drawn input) and text, even when text is edited or the document (e.g., note) is opened on other platforms. There are a number of options and alternatives for how the anchor module 470 may operate to provide automatic groupings related to annotations. Some of these options relate to "automatic" grouping, both "invisible" and "visible," as well as "manual" grouping.

Invisible grouping refers to the anchor module 470 grouping lines according to a set of rules, which act to keep the annotation system provided by the tablet scribe device 310 from distracting the user. Thus, an advantage of this approach is the use of the pen-stylus in a largely distraction free and somewhat intuitive manner. Of course, if the anchor module 470 does not perform a given grouping properly and breaks occur due to edits, the user may find this difficult to understand and have trouble figuring out to fix it.

Another form of automatic grouping by the anchor module 470 could be termed visible grouping. This approach employs visual cues to the user as a guide to group lines and/or to see anchor points. Users may find this approach more predictable than invisible automatic grouping. One possible downside of this approach is that users may not use tablet scribe devices in the same way, and in particular may use such devices differently than they use conventional pen and paper. Visible automatic grouping may also introduce distracting elements to the display that is not content.

It is also possible for the anchor module 470 to operate in a manual grouping mode rather than performing automatic grouping. One approach for manual grouping is to use user interface (UI) triggers. In such embodiments, the anchor module 470 employs explicit functionality in the device user interface to group and/or select anchor points. One advantage of this approach is likely predictability. Possible drawbacks include that such approaches may not be intuitive, may be distracting, and may possibly be cumbersome for users.

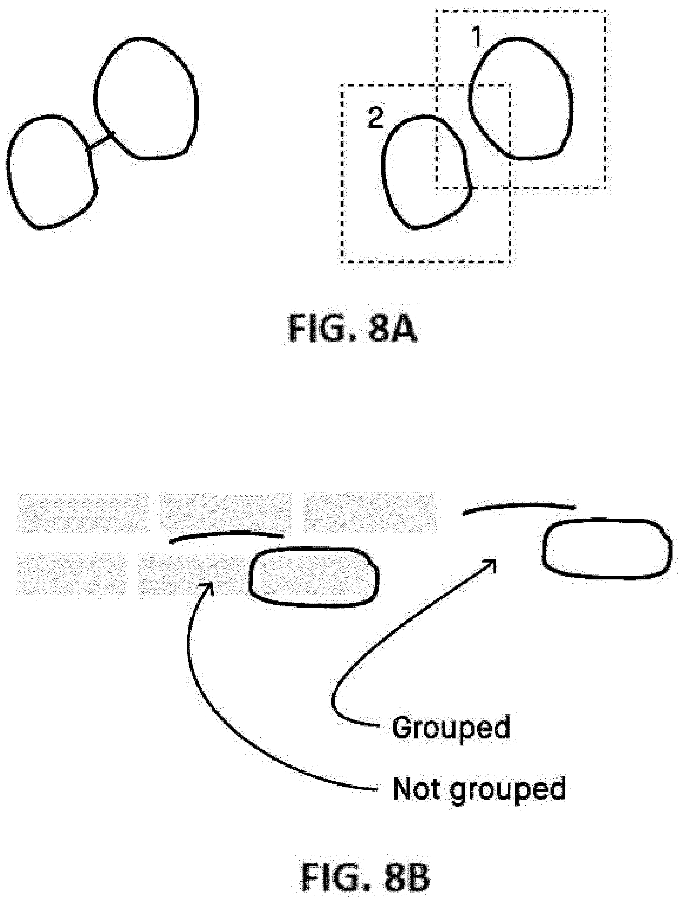

FIGs. 8A and 8B illustrate further aspects of invisible automatic grouping of annotations, according to an embodiment of the invention. As shown on the left side of FIG. 8A, two annotations include an overlapping line that joins them. In such situations, the anchor module 470 groups lines that are close to each other by checking if their bounding boxes overlap. The right side of FIG. 8A displays representative bounding boxes for a first annotation labeled (1) and a second annotation labeled (2). For such an example, the anchor module 470 would bind these annotations together.

FIG. 8B illustrates another aspect of invisible grouping related to input time, according to an embodiment of the invention. In this embodiment, the anchor module 470 time checks the proximity to lines drawn by the user within a given timeframe. Thus, the anchor module 470 checks the proximity to a previous line in both space and time. As illustrated in FIG. 8B, the anchor module 470 groups one set of annotations because they are both in proximity and in time to each other while another set of annotations similarly distanced are not grouped together because the annotations where not created by the user within a predetermined time threshold monitored by the anchor module 470.

The anchor module 470 could employ the concepts illustrated in FIGs. 8A and 8B in various subtle ways and under certain conditions, according to an embodiment of the invention. For example, if a set of annotations are not co-located with a section of text (e.g., not on top of the text), then the "proximity" approach shown in FIG. 8A would entail having the anchor module 470 grouping lines that have intersecting bounding boxes. This would enable, for example grouping annotation letters that form whole words. This approach would also anchor the annotations to paragraphs.

On the other hand, for so-called "off text" annotations, if the anchor module 470 employs distance plus time or distance plus time plus order, then the anchor module 470 may group a line with the previous line if they have intersecting bounding boxes, and only if applied by the user within a predetermined threshold time of each other (e.g., 10 seconds).

The examples above described so-called "off text" annotations. The behavior of the anchor module 470 could also differ for "on text" annotations. One option for the anchor module 470 is to only anchor on text annotations to the text itself and ignore other nearby annotations. Alternatively, the anchor module 470 could employ an overlapping annotations plus time plus order approach for "on text" annotations. In such an embodiment, the anchor module 470 would group annotations with previous annotations if they overlap, and only if applied by the user within a predetermined threshold time of each other (e.g., 10 seconds).

Each of the embodiments described above for linking annotations together by the anchor module 470 have pros and cons. For example, one advantage of the distance only approach is that fewer options makes the anchoring technique easier for users to understand, workaround and recover from unwanted results. In other words, the anchor module 470 should work as expected for the majority of time. On the other hand, the greater time between the input of two annotations suggests that they are less likely to belong together. Thus, the distance only approach may connect lines that are close but do not actually belong together.

The distance plus time embodiments likewise have potential advantages and disadvantages. As an advantage, a stricter ruleset means less accidental grouping. The time plus distance approach also allows perfectly grouped annotations if users work methodically from annotation to annotation. In terms of disadvantages, in some embodiments, there is likely no way to add new content to existing groups. A more complex ruleset might produce results users do not expect because they will try to interpret how things are done and may more often be wrong with this solution.

In many embodiments, it may be preferrable to employ the distance only approach because fewer elements in the operation of the anchor module 470 makes its operations easier to understand by users and to work around or work with to get the results they want. Using distance means that users can simply undo the action, add a line between or circle around the parts that were split apart and they will now be a group. As such, this embodiment may be more intuitive. Whether lines are anchored on their own or merged into one group depends on their proximity to one another, or if one line encloses one or more other lines. This means to keep related lines content together.

In the tablet scribe device 310, each annotation may comprise a vector including points and straight lines between those points. One or more annotations may be enclosed by a bounding box (e.g., after an annotation is generated by the user). Bounding boxes are rectangular boxes that contain one or more objects (e.g., annotations). In some embodiments, bounding boxes are never rotated, even if an annotation (e.g., line) is skewed.

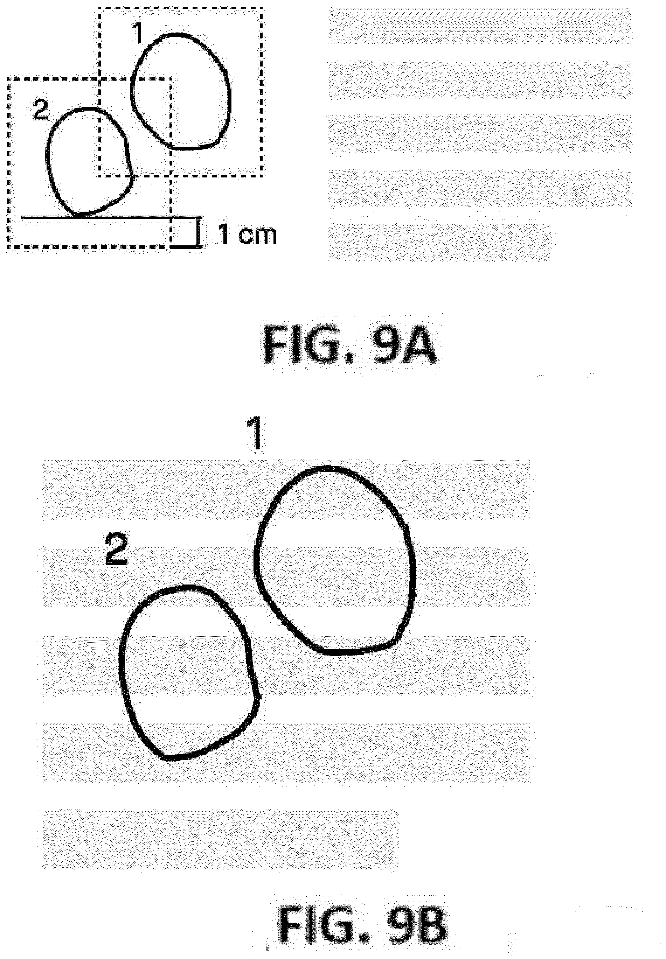

FIGs. 9A-9B illustrate additional aspects of anchoring approaches that the anchor module 470 may employ for annotations with respect to bounding boxes. The anchor module 470 may group "off text" annotations (lines) together to maintain their relationship. For example, the anchor module 470 may also pad a given distance around an annotation, such as 1 centimeter for example, to form a bounding box, as shown in FIG. 9A. However, for "on text" annotations (lines), the anchor module 470 may be configured to not group such annotations and simply anchor them to the text. The anchor module 470 may simply anchor such off text annotations to a word in the text closest to its center, for example. In terms of anchoring to the text, lines that intersect the bounding box of a glyph are defined to be "on text." The anchoring module 470 may anchor lines on text to the word that is closest to the center of the line's bounding box. Lines (e.g., annotations) off text are anchored to the start of the paragraph that is closest to the line's bounding box. New lines inherit the anchor point of the group they attach to.

In some embodiments, a bounding box is the smallest box (e.g., smallest area) that includes the one or more objects (e.g., annotations), while in other embodiments, the bounding box may be larger (e.g., by threshold distance or area).

FIGs. 10A-C provide examples of bounding boxes with respect to annotations. FIG. 10A illustrates a bounding box enclosing multiple annotations that were grouped together to form a single annotation. FIGs. 10B-C illustrate bounding boxes enclosing single annotations.

### Example Method for Anchoring an Annotation

### Step 1: Determine if the annotation is on top of the text or not

The anchor module 470 determines if one or more (e.g., any) points in a new annotation intersect with a bounding box of text (e.g., a bounding box for a single character, word, or paragraph). If yes, the anchor module 470 labels the annotation as "vertically and horizontally anchored." If no, the anchor module labels the annotation as "vertically anchored."

### Step 2: Determine if the new annotation should be grouped with another annotation

The anchor module 470 determines if the bounding box of the new annotation intersects with the bounding box of one or more existing annotations (e.g., annotations that were generated before the new annotation). If yes, the anchor module 470 groups the new annotation with the one or more existing annotations. But there may be a different determination depending on whether the new annotation is on top of the text or not (see above determinations in step 1):
a) For "vertically and horizontally anchored" annotations, (e.g., only) the anchor module 470 checks with other annotations that are already labeled "vertically and horizontally anchored" themselves.
b) For "vertically anchored" lines, (e.g., only) the anchor module 470 checks annotations that are already labeled "vertically anchored" themselves. Additionally, the anchor module 470 may add an extra margin (approx. 7.5 mm (or another threshold) on screen) around the bounding box of the new annotation to more easily form groups outside the text. Said differently, the anchor module 470 may enlarge the bounding box. This may result in the bounding box intersecting with more bounding boxes of other annotations.

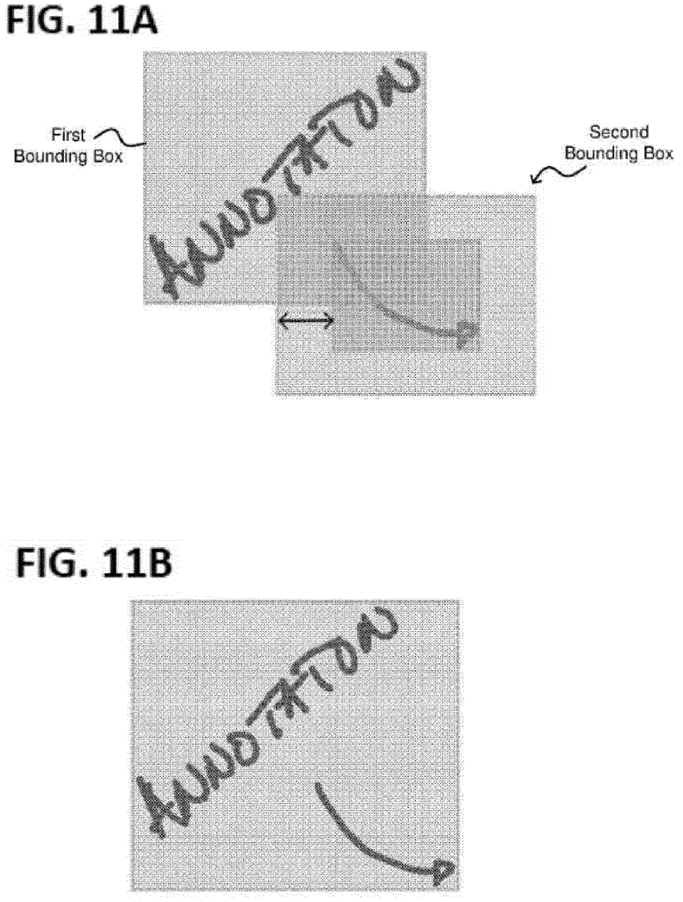

FIGS. 11A-B illustrate the anchor module 470 grouping annotations based on bounding boxes, according to an embodiment of the invention. In FIG. 11A, the first bounding box encloses a first annotation, and the second bounding box encloses a second annotation (an arrow). The second bounding box is enlarged (indicated by the horizontal double-headed arrow), for example, because it was labeled as a "vertically anchored" annotation. Since the first and second bounding boxes intersect each other, the anchor module 470 combines the annotations to form a single annotation (which may be referred to as a "group annotation") that is enclosed by a single bounding box (may be referred to as a combined bounding box). This new combination is illustrated in FIG. 11B.

### Step 3: Identify an anchor point

After a bounding box is formed, and after any possible grouping, the anchor module 470 identifies an anchor point and selects the anchoring point for the annotation in the bounding box. In some embodiments, the anchor module 470 selects the closest anchor point in the text from the center of the bounding box. The anchor module 470 anchors the annotation in the bounding box to that specific text character by its identifier, so the annotation will continue to be anchored to the same character, even if the text is edited (e.g., simultaneously) on other platforms and then merged. Points other than the center point may be used to select the anchor point.

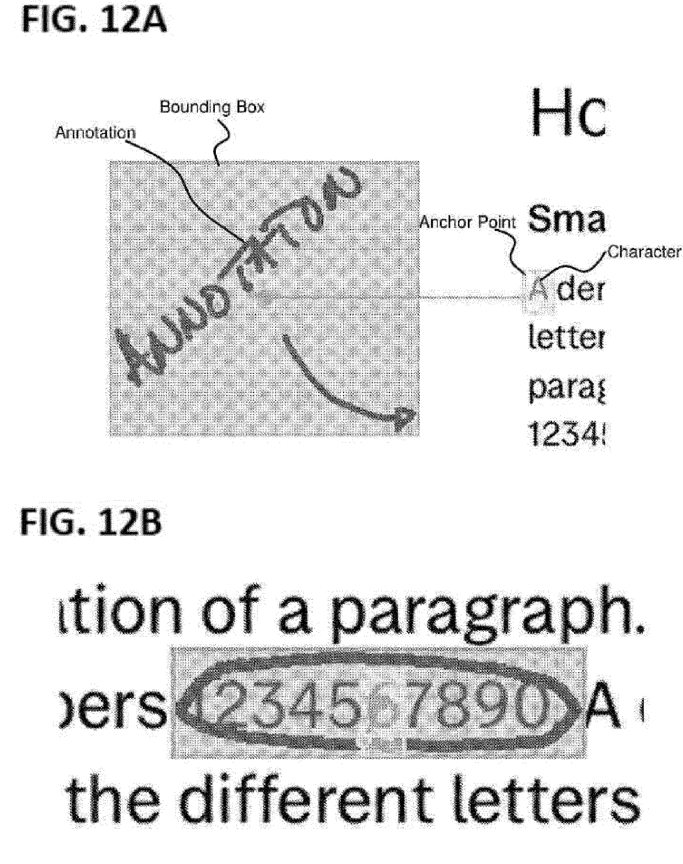

FIG. 12A illustrates an annotation (with a bounding box) anchored to a text character by the anchor module 470. In this example, the anchor module 470 selects the text character "A" as the anchor point for the annotation because the character is the closest character to the center of the bounding box. FIG. 12B provides another illustration of an annotation (a horizontal oval) anchored to a text character (the number 6) because it is the closest character to the center of the bounding box that contains the oval annotation.

### Special Casing

In some embodiments, the anchor module 470 anchors annotations above the text (e.g., a paragraph) to the top of the text.

### How the annotations move when the user edits the text

### Vertically anchored lines

If a character that an annotation is anchored to moves vertically in the document, the annotation's display may move the same distance vertically or substantially the same distance vertically (e.g., +/-10%). For example, if moving an annotation by the same distance vertically would result in the annotation overlapping with another annotation, the anchor module 470 may adjust the movement so that the annotations do not overlap. If the character is only moved horizontally in the document, then the annotation may keep its position. In other words, the position of the anchored annotation may remain unchanged. Thus, for example, an annotation on the side of a paragraph (e.g., in the margin) will follow the paragraph if it is moved.

### Vertically and horizontally anchored lines

If a character that an annotation is anchored to moves in the document, the annotation's display may move the same distance both vertically and horizontally or substantially the same distances in the vertical and horizontal directions (e.g., +/-10%). Thus, for example, a circle annotation around a word will follow that word if it is moved. As described above, in some embodiments the annotation movements do not exactly match the anchor movements (e.g., to avoid creating overlapping annotations).

### How annotations move when edits are made across different devices

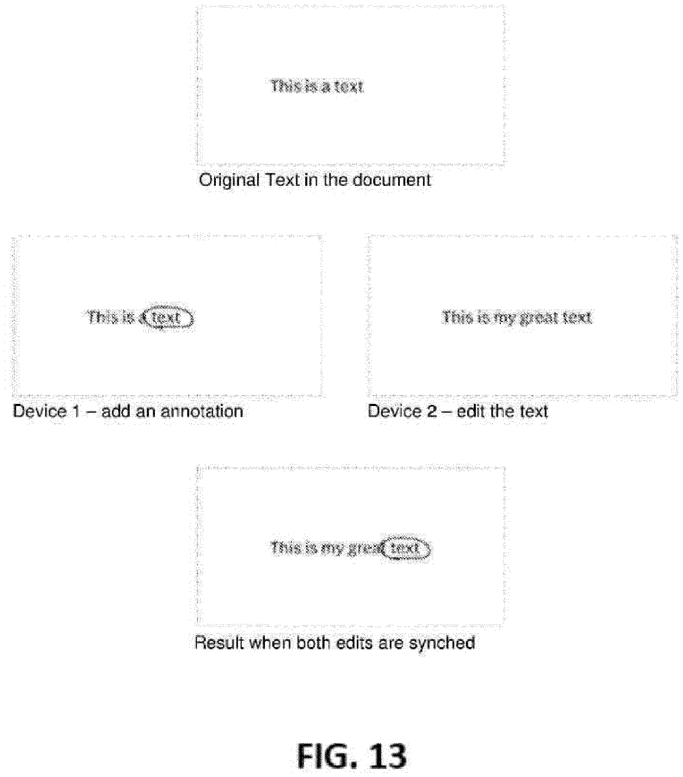

If two (e.g., simultaneous) edits are made in two different places (e.g., by two devices both editing the same document), anchoring helps ensure that the annotations will keep their intended relationships with the text when the edits are synchronized. FIG. 13 illustrates this situation. As shown in FIG. 13, a text in a document common to two devices reads "This is a text." A user in the first device circles the word "text" with an annotation that is anchored to the word "text." A user in the second device inserts the word "great" into the sentence. When the devices are synchronized, then the sentence now states "This is my great text" with a circular annotation surrounding the word "text" on both devices.

A conflict resolution module (e.g., on the tablet scribe device 310 or cloud server 330) may be used to synchronize edits. Said differently, the conflict resolution module may manage merging changes generated from different sources. For example, a document includes two paragraphs of text and on a first device (e.g., a tablet) a user draws between the paragraphs, while on a second device (e.g., a desktop computer) the user adds another paragraph at the start of the document. The conflict resolution module may merge together the drawing made using on first device and the paragraph added using the second device. The conflict resolution module may employ data structures like CRDT as previously discussed.

### Descriptions of FIGS. 14A-C

FIGS. 14A-C illustrate the use of annotation anchoring with text displayed in a portion of an interface, according to some embodiments. The interface includes paragraphs of text. The text may be provided by the user e.g., using a keyboard.

FIG. 14A illustrates a portion of an interface displayed by a computer system (e.g., a tablet device 310). This portion of text includes a first and second paragraph as noted.

In FIG. 14B, the first, second, and third annotations have been added to the text by the user. The annotations may be added by a user of the computer system e.g., using a finger or a stylus. In the example of FIG. 14B, the annotations are in the margins (on left and right sides of the text); however, this is not required since annotations may be made on top of the text itself. Here, the annotations correspond to the text. For example, the positions of the annotations and the words, symbols, or shapes of the annotations communicate relationships (e.g., reactions or feedback) between the text and the annotations. In the example of FIG. 14B, the first annotation includes an arrow pointing to the first paragraph and a reaction ("Yes!") to the first paragraph. Also, the third annotation communicates a reaction("!") to the second paragraph. Due to this, it is desirable for the annotations to be displayed relative to the text (e.g., aligned with the text) they correspond to even if the text is altered or the text and annotations are displayed by a different computer system. As further described below, anchoring enables this (among other advantages).

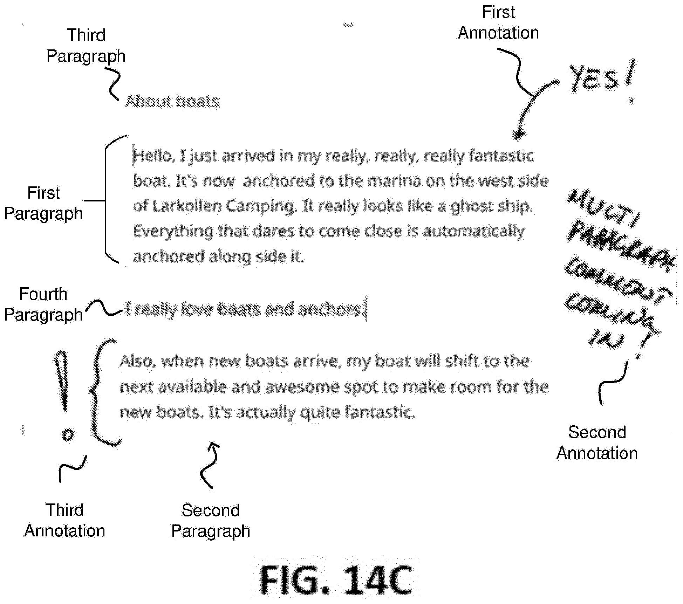

In FIG. 14C, the user adds two new text paragraphs to the existing text. Specifically, the third paragraph is added above the first and second paragraphs, and a fourth paragraph is added in between the first and second paragraphs. When the third paragraph is added, the first and second paragraphs are shifted downward. Due to anchoring, the first, second, and third annotations are also shifted downward (e.g., by the same amount, substantially the same amount, or a proportional amount) so that the annotations are displayed relative to the text they correspond to (e.g., the annotations remain aligned to the text they correspond to). When the fourth paragraph is added, the second paragraph is shifted downward. Due to anchoring, the third annotation (relating to the second paragraph) is also shifted downward. However, the first annotation (relating to the first paragraph) does not shift downward.

The anchor module 470 anchors annotations (e.g., marked words, underlining, and markings between and beneath text) to the top of the closest paragraph and follows that paragraph wherever it may end up.

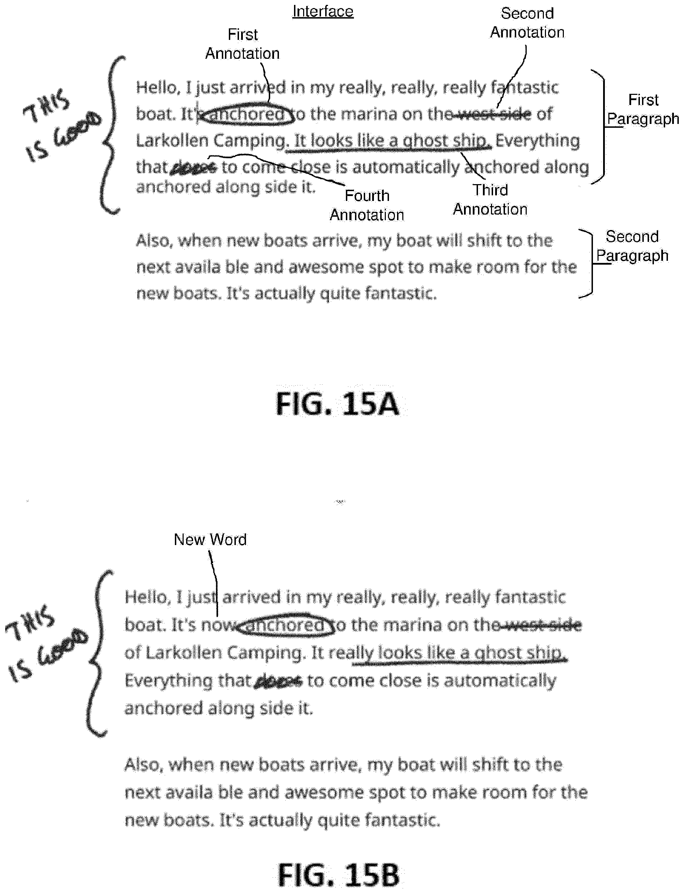

### Descriptions of FIGS. 15A-B

FIGS. 15A-B also illustrate the use of annotation anchoring with text displayed in a portion of an interface, according to some embodiments.

FIG. 15A illustrates a portion of an interface displayed by a computer system (e.g., tablet scribe device 310). The interface includes paragraphs of text and anchored annotations (labeled first, second, third and fourth annotations).

In FIG. 15B, a user adds a new word ("now") to the first paragraph. When the new word is added, the display on the tablet scribe device 310 moves the remaining text in the first paragraph the tablet scribe device 310 to accommodate the new word (e.g., the word "of' is moved down to the next line). Due to earlier anchoring by the anchor module 470, the first, second, third, and fourth annotations are also moved so that they are displayed relative to the text they correspond to (e.g., the annotations remain aligned to their corresponding text). For example, the first annotation remains centered on the word "anchored" and the second annotation remains centered on the words "west side."

The anchor module 470 may be configured to anchor marks to words and follow them both horizontally and vertically.

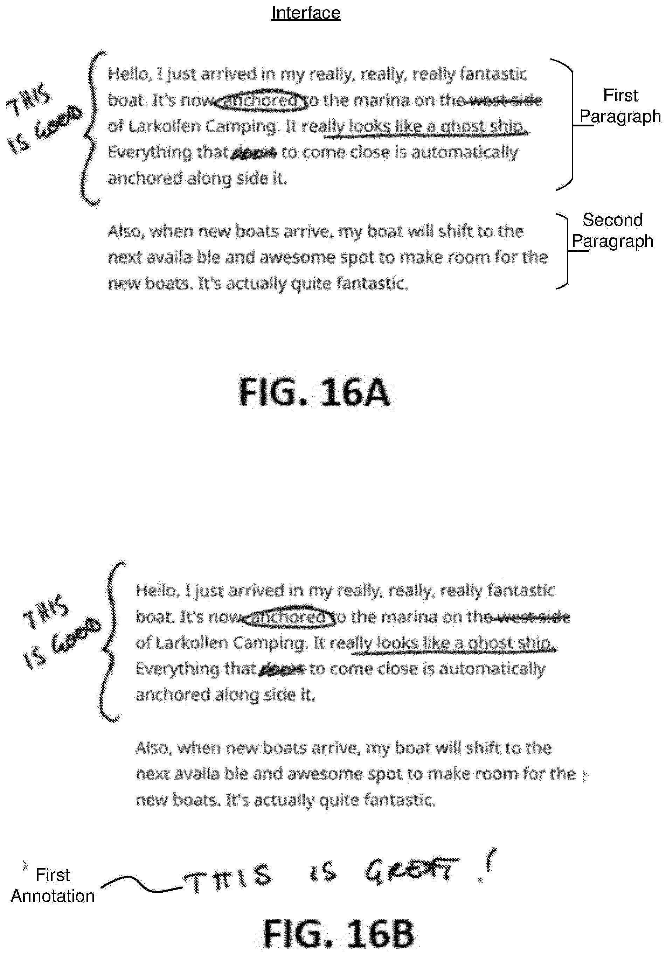

### Description of FIGS 16A-D

FIGS. 16A-D also illustrate the use of annotation anchoring by the anchor module 470 and the resulting impacts of anchoring on text displayed in a portion of an interface, according to some embodiments.

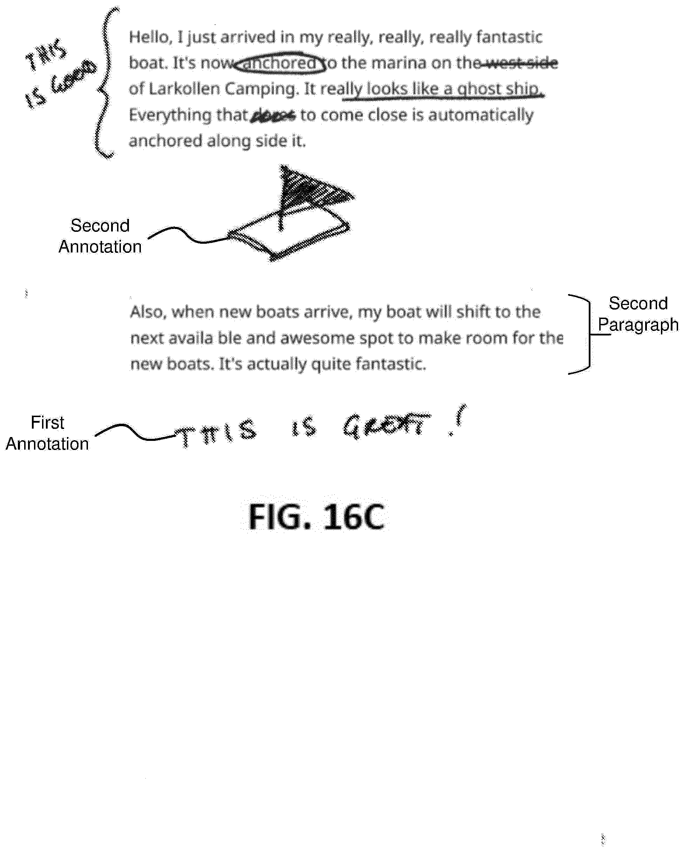

FIG. 16A illustrates a portion of an interface displayed by a computer system (e.g., tablet scribe device 310). The interface includes paragraphs of text and annotations anchored by the anchor module 470. In FIG. 16B, a first annotation is added by the user below the second paragraph. In FIG. 16C, the second paragraph is shifted downward by the user inserting a small drawing. Due to earlier anchoring by the anchor module 470, the first annotation is shifted downward along with the second paragraph. A second annotation is added by the user in the newly generated space between the first and second paragraphs.

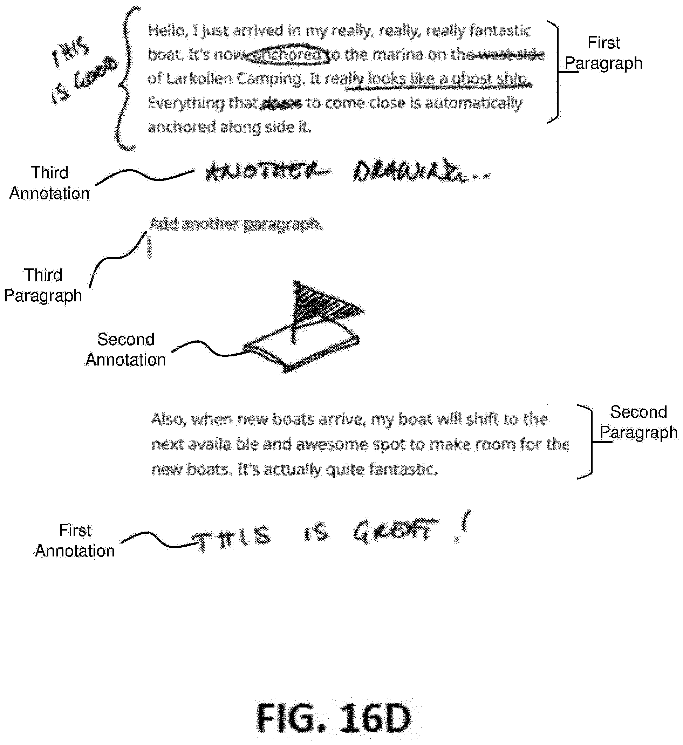

In FIG. 16D, the user forms a third paragraph between the first paragraph and the second annotation. Because of earlier anchoring by the anchor module 470 the second annotation, along with the second paragraph and the first annotation, are shifted downward. Additionally, the anchor module 470 adds a third annotation between the first paragraph and the third paragraph.

Thus, the tablet scribe device 310 may be configured to draw beneath and between text with corresponding anchoring matching the changes made. As such, drawings beneath and between text follow will remain in their natural position.

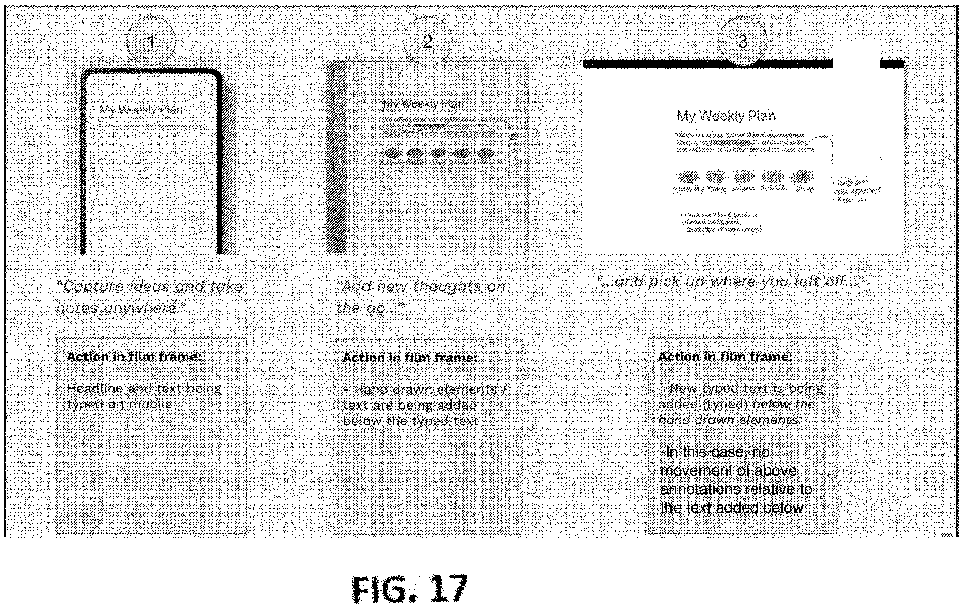

### Description of FIG. 17

FIG. 17 illustrates additional images and descriptions of annotation anchoring.

### COMPUTING MACHINE ARCHITECTURE

FIG. 18 is a block diagram illustrating components of an example machine able to read instructions from a machine-readable medium and execute them in a processor (or controller), according to one embodiment. Specifically, FIG. 18 shows a diagrammatic representation of a machine in the example form of a computer system 1800 within which program code (e.g., software) for causing the machine to perform any one or more of the methodologies discussed herein may be executed. The tablet scribe device 310 may include some or all of the components of the computer system 1800. The program code may be comprised of instructions 1824 executable by one or more processors 1802. In some embodiments, the anchor module 470, or parts of it, may comprise executable instructions. In the tablet scribe device 310, the instructions of the anchor module 470 may correspond to the processing steps described with respect to FIGS. 7-17.

While the embodiments described herein are in the context of the tablet scribe device 310, it is noted that the principles may apply to other touch sensitive devices. In those contexts, the machine of FIG. 18 may be a server computer, a client computer, a personal computer (PC), a tablet PC, a set-top box (STB), a personal digital assistant (PDA), a cellular telephone, a smartphone, a web appliance, a network router, an internet of things (IoT) device, a switch or bridge, or any machine capable of executing instructions 1824 (sequential or otherwise) that specify actions to be taken by that machine. Further, while only a single machine is illustrated, the term "machine" shall also be taken to include any collection of machines that individually or jointly execute instructions 1824 to perform any one or more of the methodologies discussed herein.

The example computer system 1800 includes one or more processors 1802 (e.g., a central processing unit (CPU), one or more graphics processing units (GPU), one or more digital signal processors (DSP), one or more application specific integrated circuits (ASICs), one or more radio-frequency integrated circuits (RFICs), or any combination of these), a main memory 1804, and a static memory 1806, which are configured to communicate with each other via a bus 1808. The computer system 1800 may further include visual display interface 1810. The visual interface may include a software driver that enables displaying user interfaces on a screen (or display). The visual interface may display user interfaces directly (e.g., on the screen) or indirectly on a surface, window, or the like (e.g., via a visual projection unit). For ease of discussion the visual interface may be described as a screen. The visual interface 1810 may include or may interface with a touch enabled screen. The computer system 1800 may also include alphanumeric input device 1812 (e.g., a keyboard or touch screen keyboard), a cursor control device 1814 (e.g., a mouse, a trackball, a joystick, a motion sensor, or other pointing instrument), a storage unit 1816, a signal generation device 1818 (e.g., a speaker), and a network interface device 1820, which also are configured to communicate via the bus 1808.

The storage unit 1816 includes a machine-readable medium 1822 on which is stored instructions 1824 (e.g., software) embodying any one or more of the methodologies or functions described herein. The instructions 1824 (e.g., software) may also reside, completely or at least partially, within the main memory 1804 or within the processor 1802 (e.g., within a processor's cache memory) during execution thereof by the computer system 1800, the main memory 1804 and the processor 1802 also constituting machine-readable media. The instructions 1824 (e.g., software) may be transmitted or received over a network 1826 via the network interface device 1820.

While machine-readable medium 1822 is shown in an example embodiment to be a single medium, the term "machine-readable medium" should be taken to include a single medium or multiple media (e.g., a centralized or distributed database, or associated caches and servers) able to store instructions (e.g., instructions 1824). The term "machine-readable medium" shall also be taken to include any medium that is capable of storing instructions (e.g., instructions 1824) for execution by the machine and that cause the machine to perform any one or more of the methodologies disclosed herein. The term "machine-readable medium" includes, but not be limited to, data repositories in the form of solid-state memories, optical media, and magnetic media.

The computer system 1800 also may include the one or more sensors 1825. Also note that a computing device may include only a subset of the components illustrated and described with FIG. 18. For example, an IoT device may only include a processor 1802, a small storage unit 1816, a main memory 1804, a visual interface 1810, a network interface device 1820, and a sensor 1825.

### ADDITIONAL CONSIDERATIONS

It is to be understood that the figures and descriptions of the present disclosure have been simplified to illustrate elements that are relevant for a clear understanding of the present, disclosure, while eliminating, for the purpose of clarity, many other elements found in a typical system. Those of ordinary skill in the art may recognize that other elements and/or steps are desirable and/or required in implementing the present disclosure. However, because such elements and steps are well known in the art, and because they do not facilitate a better understanding of the present disclosure, a discussion of such elements and steps is not provided herein. The disclosure herein is directed to all such variations and modifications to such elements and methods known to those skilled in the art.

Some portions of present disclosure describe the embodiments in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as engines, without loss of generality. The described operations and their associated engines may be embodied in software, firmware, hardware, or any combinations thereof.

As used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

Where values are described as "approximate" or "substantially" (or their derivatives), such values should be construed as accurate +/- 10% unless another meaning is apparent from the context. From example, "approximately ten" should be understood to mean "in a range from nine to eleven."

As used herein, the terms "comprises," "comprising," "includes," "including," "has," "having" or any other variation thereof are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of the "a" or "an" are employed to describe elements and components of the embodiments herein. This is done merely for convenience and to give a general sense of the invention. This description should be read to include one or at least one and the singular also includes the plural unless it is obvious that it is meant otherwise.

The method according to any embodiment of the present disclosure may generally be executed by a computerized device such as a tablet scribe device. A computerized device, e.g. a tablet scribe device, may thus be provided which comprises means adapted to execute the method according to any embodiment of the present disclosure. More specifically, a computer program may be provided that comprises instructions to cause the computerized device to execute the method according to any embodiment of the present disclosure. The computer program may be stored on a computer-readable medium, where the computer-readable medium may optionally be arranged in the computerized device. In other words, a non-transitory computer-readable storage medium may thus be provided which comprises stored instructions that, when executed by a computerized device, e.g. a tablet scribe device, cause the computerized device to perform operations including the method according to any embodiment of the present disclosure. The computer program may alternatively be stored in a cloud.

## Claims

1. A tablet scribe device, comprising:
a screen,
where the tablet scribe device is configured to:
display, on the screen, a document having text characters, wherein the text characters in the document each is assigned with a unique identifier;
receive a first annotation to the document from an input mechanism;
update the display on the screen to show both the document and the first annotation;
determine a center of the first annotation;
determine, from the text characters in the document, a text character in the document whose presentation on the screen lies in closest proximity to the determined center of the first annotation; and
associate an anchor point for the first annotation in the document with the unique identifier of the determined text character such that display of the first annotation is updated to move with the determined text character in future displays of the document.

2. The tablet scribe device of claim 1 wherein the tablet scribe device is further configured to
receive an edit to the document that causes text characters in the document to move, including the text character of the anchor point, and
move display of the first annotation a predetermined distance to correspond to movement of the anchor point in the document.

3. The tablet scribe device of claim 2 wherein the predetermined distance is no more than 10% of the anchor point movement.

4. The tablet scribe device of claim 1, wherein the tablet scribe device is further configured to
receive a second annotation to the document within a predetermined time of receiving the first annotation,
update the screen to show the document, the first annotation, and the second annotation,
determine if a distance between the first annotation and the second annotation on the display is within a predetermined distance;
link the first annotation to the second annotation to form a group annotation;
determine a center of the group annotation; and
update the association of the anchor point for the first annotation in the document such that the anchor point becomes an updated anchor point for the group annotation in the document associated with the unique identifier of the determined text character and such that display of the group annotation is updated to move with the determined text character in future displays of the document.

5. The tablet scribe device of claim 1, wherein the tablet scribe device is further configured to
determine a bounding box around the first annotation and applying dimensions of the bounding box to determine the center of the first annotation.

6. The tablet scribe device of claim 1, wherein the tablet scribe device is further configured to
receive an edit to the document originating from a computerized device different from the tablet scribe device; and
update the display of the document by moving the first annotation up to a predetermined distance corresponding to movement of the anchor point in the document.

7. The tablet scribe device of claim 6 wherein the edit to the document comprises at least one of an addition to a text character in the document and a deletion of a text character in the document.

8. The tablet scribe device of claim 6, the tablet scribe device is further configured to:
change a position of one or more text characters in the document to accommodate the edit, the identified text character being one of the one or more text characters changing positions; and
change a position of the annotation based on the position change of the identified text character.

9. The tablet scribe device of claim 1 wherein the document is encoded in a conflict-free replicated data type (CRDT) data structure.

10. A method comprising:
receiving by a tablet scribe device a document having text characters, wherein the text characters in the document each is assigned with a unique identifier;
displaying the document on a screen of the tablet scribe device,
receiving from an input mechanism a first annotation to the document displayed on the screen of the tablet scribe device;
updating the display on the screen of the tablet scribe device to show both the document and the first annotation;
determining a center of the first annotation;
determining, from the text characters in the document, a text character in the document whose presentation on the screen of the tablet scribe device lies in closest proximity to the determined center of the first annotation; and
associating an anchor point for the first annotation in the document with the unique identifier of the determined text character such that display of the first annotation is updated to move with the determined text character in future displays of the document.

11. The method of claim 10, further comprising:
receiving an edit to the document that causes text characters in the document displayed to move, including the text character of the anchor point;
moving display of the first annotation a predetermined distance to correspond to movement of the anchor point in the document.

12. The method of claim 11 wherein the predetermined distance is no more than 10% of the anchor point movement.

13. The method of claim 10, further comprising:
receiving a second annotation to the document displayed on the screen of the tablet scribe device, wherein the second annotation is received within a predetermined time of the first annotation;
displaying by the screen of the tablet scribe device, the document, the first annotation, and the second annotation;
determining if a distance between the first annotation and the second annotation on the display is within a predetermined distance;
linking the first annotation to the second annotation to form a group annotation;
determining a center of the group annotation;
updating the association of the anchor point for the first annotation in the document such that the anchor point becomes an updated anchor point for the group annotation in the document associated with the unique identifier of the determined text character and such that display of the group annotation is updated to move with the determined text character in future displays of the document.

14. The method of claim 10, further comprising:
determining a bounding box around the first annotation and applying dimensions of the bounding box to determine the center of the first annotation.

15. The method of claim 10, further comprising:
receiving an edit to the document, wherein the edit originates from a computerized device different from the tablet scribe device; and
updating the display of the document by moving the first annotation up to a predetermined distance corresponding to movement of the anchor point in the document.

16. The method of claim 15 wherein the edit to the document comprises at least one of an addition to a text character in the document and a deletion of a text character in the document.

17. The method of claim 15, further comprising
changing a position of one or more text characters in the document to accommodate the edit, the identified text character being one of the one or more text characters changing positions; and
changing a position of the annotation based on the position change of the identified text character.

18. The method of claim 10 wherein the document is encoded in a conflict-free replicated data type (CRDT) data structure.

19. A tablet scribe device having means adapted to execute the steps of the method according to any one of the claims 10 - 18.

20. A computer program comprising instructions to cause the device of claim 19 to execute the steps of the method according to any one of the claims 10-18

21. A computer-readable medium having stored thereon the computer program of claim 20.
